**Europäisches Patentamt**

**European Patent Office**

**Office européen des brevets**

(19)

(11) Veröffentlichungsnummer: **0 089 453**

**A1**

(12) **EUROPÄISCHE PATENTANMELDUNG**

(21) Anmeldenummer: 83100278.7

(22) Anmeldetag: 14.01.83

(51) Int. Cl.³: **G 06 K 9/00**
**G 06 K 9/20, G 06 F 3/023**

(30) Priorität: 13.02.82 DE 3205190

(43) Veröffentlichungstag der Anmeldung:
28.09.83 Patentblatt 83/39

(84) Benannte Vertragsstaaten:
DE FR GB IT SE

(71) Anmelder: MESSER GRIESHEIM GMBH
Patentabteilung Hanauer Landstrasse 330
D-6000 Frankfurt/Main 1(DE)

(72) Erfinder: Halbauer, Klaus, Dr.
Eisenbahnstrasse 147
D-6072 Dreieich(DE)

(54) Einrichtung zur Erstellung eines Steuerlochstreifens für Werkzeugmaschinen, insbesondere Brennschneidmaschinen.

(57) Eine derartige Einrichtung weist einen Signalumsetzer (10) auf, dem zur Lochstreifenerstellung geometrische Kennwerte des herzustellenden Bauteiles (14) eingegeben werden. Um eine einfache Bauteilbeschreibung/Codierung zu erreichen, wird vorgeschlagen, daß zur Eingabe der Bauteil-Kennwerte dem Singalumsetzer (10) ein Fernkopierer (11) vorgeschaltet ist, mit der die geometrische Form sowie die Abmessungen einer Bauteilzeichnung (13, 14) erfaßbar und damit direkt dem Signalumsetzer zuführbar sind.

EP 0 089 453 A1

Croydon Printing Company Ltd.

MESSER GRIESHEIM GMBH                    MG 1374

Kennwort: Eingabe-Fernkopierer          EM 1045

Erfinder: Halbauer                      Ordner: II

Einrichtung zur Erstellung eines Steuerlochstreifens für
Werkzeugmaschinen, insbesondere Brennschneidmaschinen

Die vorliegende Erfindung betrifft eine Einrichtung zur
Erstellung eines Steuerlochstreifens für Werkzeugmaschinen,
insbesondere Brennschneidmaschinen, mit einem Signalumsetzer,
dem die zur Lochstreifenerstellung geometrischen Kennwerte
des herzustellenden Bauteiles eingegeben werden.

Bei den bisher bekannt gewordenen Einrichtungen dieser
Art erfolgt die Eingabe der geometrischen Kennwerte (das
Codieren) der Bauteile mit Hilfe von speziellen Programmiersprachen wie z.B. der Programmsprache BASIC-EXAPT.

Einfache Bauteile können mit diesen Programmsprachen relativ einfach und in kurzer Zeit "rechnergerecht beschrieben" werden. Komplizierte Bauteilformen, insbesondere solche mit  geschwungenen Außenkonturen sind dagegen nur mit

- 2 -

großem Aufwand zu beschreiben.

Aufgabe der vorliegenden Erfindung ist es daher, eine Einrichtung der eingangs genannten Art zu schaffen, die eine einfache Bauteilbeschreibung auch bei komplizierten Bauteilformen ermöglicht.

Zur Lösung dieser Aufgabe wird erfindungsgemäß vorgeschlagen, daß zur Bauteileingabe an den Signalumsetzer ein Fernkopierer angeschlossen ist, mit dem die geometrische Form sowie die Abmessungen einer Bauteilzeichnung erfaßbar und damit direkt dem Signalumsetzer zuführbar sind.

Durch die Erfindung wird es vorteilhaft möglich, eine Konstruktionszeichnung, die auch verkleinert sein kann, oder eine beliebige mit Zeichnungsmaßen versehene Bauteil-Handskizze oder eine Designerzeichnung direkt zur Lochstreifenerstellung zu verwenden. Eine technische Zeichnung mit ihrer technischen Bemaßung dient somit als Informationsträger. Die Signalumsetzung kann über einen frei programmierbaren Rechner oder über fest verdrahtete Funktionen erfolgen. Damit wird aus den optisch aufgenommenen/ermittelten Werten eine besonders einfache und zeitsparende Lochstreifenerstellung erreicht, wobei der Lochstreifen das Bauteil im Maßstab 1 : 1 repräsentiert.

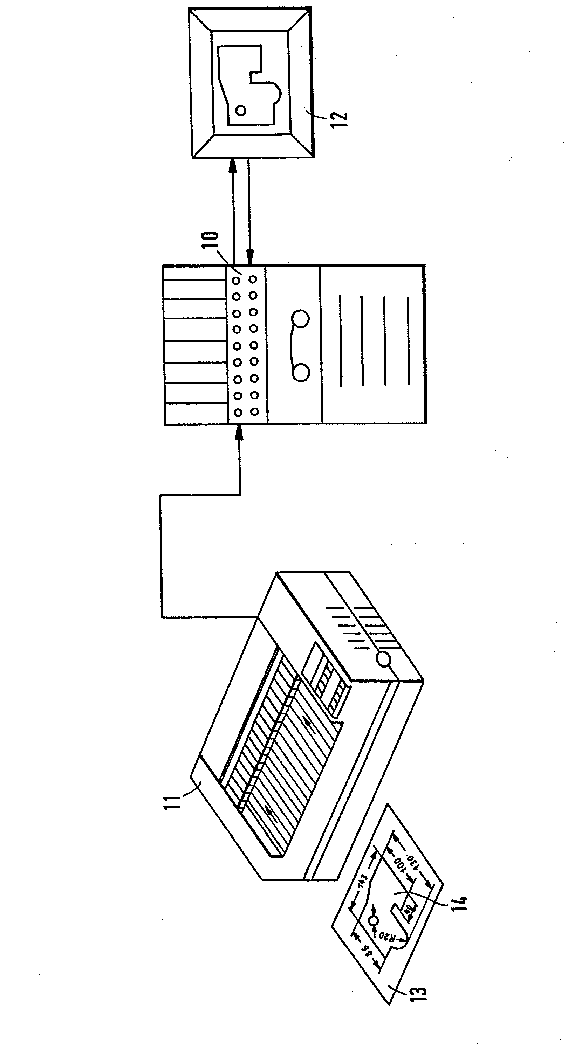

In der Zeichnung ist eine schematische Darstellung, die die erfindungsgemäße Einrichtung, veranschaulicht.

Dabei ist der Signalumsetzer (beispielsweise ein von der Anmelderin unter der Bezeichnung SPC 16/65 vertriebener Rechner)mit 10 bezeichnet. Dem Rechner 10 ist eingangsseitig ein Fernkopierer 11 und ausgangsseitig ein graphisches Ausgabegerät 12 zugeordnet. Der Fernkopierer 11 ist bevorzugt entsprechend einem von der Fa. Siemens, Frankfurt unter der Bezeichnung HF 2040 vertriebenen Fernkopierer ausgebildet.

Das graphische Ausgabegerät 12 ist als Plotter, graphischer
Bildschirm oder dergl. ausgebildet. Die Zeichnung ist mit
13 bezeichnet. Diese Ausgangszeichnung 13,Format beispielsweise
DIN A 4, besteht im einfachsten Fall aus einer Handskizze,
die die Formen (Außenkontur, Aussparungen) des Bauteiles 14
darstellt für das ein Steuerlochstreifen hergestellt werden
soll. Zusätzlich sind die Abmessungen des Bauteiles in Form
von Maßzahlen und Maßpfeilen in der Zeichnung bereits
enthalten. Diese Zeichnung wird von dem Fernkopierer 11 erfaßt,
und bevorzugt die charakteristischen Punkte (zum Beispiel
Schnittpunkte von Konturenelementen, Endpunkte von Maßpfeilen) als digitalisierte, geometrische Daten dem Rechner
10 zur Verfügung gestellt. Dieser ermittelt mittels einem
installierten Programm aus den Daten die Form des
Bauteiles und prüft dabei inwieweit alle benötigten Abmessungen bereits eingegeben wurden. Fehlende Abmessungen
werden ebenfalls festgestellt.

Gleichzeitig oder je nach Arbeitsweise werden anschließend
die vom Rechner 10 festgestellte Bauteilform und die ermittelten geometrischen Daten sowie die als fehlend erkannten
Daten auf einem graphischen Ausgabegerät, (graphischer
Bildschirm, Plotter, elektrostatischer Plotter) dargestellt.
In bekannter interaktiver Arbeitsweise können nun an dem
so erfaßten Bauteil Korrekturen, Ergänzungen, Änderungen
sowohl in der Form als auch in den Maßen vorgenommen werden.
Hier kommt vorzugsweise eine Menütechnik in Frage, deren
Befehlselemente sich auf die Konturenelemente der Bauteilform beziehen, d.h. der Rechner bietet die einzelnen Bahnelemente zum Beispiel solche, deren Vermaßung noch fehlt, dem
Benutzer zur weiteren Bearbeitung an. Weitere Menüelemente
sind zum Beispiel Einfügungen von Radien, definieren von tangen-

- 4 -

tialen Übergängen, Löschen von Konturelementen und dgl.

Nach Beendigung dieser Arbeiten können vom Rechner 10 die so codierten/beschriebenen Bauteile in an sich bekannter Weise weiterverarbeitet, beispielsweise geschachtelt und das Ausdrucken des Steuerlochstreifens durch einen Lochstreifendrucker veranlaßt werden.

Durch die Erfindung wird dem Benutzer die bisher notwendige aufwendige Arbeit abgenommen, die Form der Bauteile mit expliziten programmsprachenabhängigen Konturangaben zu beschreiben. Vielmehr ist vorteilhaft eine einfache Skizze mit den notwendigen Hauptabmessungen ausreichend.

Selbstverständlich ist es auch möglich,die Signale anstatt mit einem frei programmierbaren Rechner über hardwaremäßig fest verdrahtete Funktionen im Signalumsetzer 10 umzusetzen.

Gr/Ha
EM 1045

0089453

10.2.1982

## Patentansprüche

1. Einrichtung zur Erstellung eines Steuerlochstreifens für Werkzeugmaschinen, insbesondere Brennschneidmaschinen mit einem Signalumsetzer, dem die zur Lochstreifenerstellung geometrischen Kennwerte des herzustellenden Bauteiles eingegeben werden,
dadurch gekennzeichnet,
daß zur Bauteileingabe an den Signalumsetzer (10) ein Fernkopierer (11) angeschlossen ist, mit dem die geometrische Form sowie die Abmessungen einer Bauteilzeichnung (13,14) erfaßbar und damit direkt dem Signalumsetzer zuführbar sind.

2. Einrichtung nach Anspruch 1,
dadurch gekennzeichnet,
daß an dem Signalumsetzer/Rechner (10) ein graphisches Ausgabegerät (12) zur Kontrolle/Korrektur der Bauteileingabe angeschlossen ist.

Gr/Ha
EM 1045

0089453

# 0089453

## EUROPÄISCHER RECHERCHENBERICHT

| | EINSCHLÄGIGE DOKUMENTE | | EP 83100278.7 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE - A1 -3 014 629 (HITACHI) <br> * Seite 1, Zeilen 1-10 * <br> -- | 1 | G 06 K 9/00 <br> G 06 K 9/20 <br> G 06 F 3/023 |
| A | DE - A1 -2 541 136 (FUJITSU) <br> * Seiten 1-2; Fig. 2 * <br> -- | 1 | |
| A | DE - A1 - 3 106 346 (DAINIPPON) <br> * Anspruch 1; Fig. 1 * <br> -- | 1 | |
| A | DE - A1 - 2 108 791 (TARCZY-HORNOCH) <br> * Anspruch 1 * <br> -- | 1 | |
| A | GB - A - 2 077 956 (SCHIEBER) <br> * Seite 2, Zeilen 47-65; Fig. 1 * <br> -- | 1 | RECHERCHIERTE SACHGEBIETE (Int. Cl. ³) <br><br> G 06 K |
| A | HEWLETT PACKARD JOURNAL, Vol. 29, No. 1, September 1977, Amstelveen 1134, The Netherlands <br><br> L.G. BRUNETTI "A new family of intelligent multi color X-Y plotters" <br> Seiten 2-5 <br><br> * Seite 2, rechte Spalte, Absatz 2; Seite 3, rechte Spalte, 3. Absatz - Seite 4, linke Spalte, Absatz 1; Fig. 1,2 * <br> -- | 2 | G 06 F <br> G 05 B <br> H 04 N <br> B 23 K |

Der vorliegende Recherchenbericht wurde für alle Patentansprüche erstellt.

| Recherchenort | Abschlußdatum der Recherche | Prüfer |
|---|---|---|
| WIEN | 04-07-1983 | MIHATSEK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

| Kategorie | Kennzeichnung des Dokuments mit Angabe, soweit erforderlich, der Maßgeblichen Teile | betrifft Anspruch |
|---|---|---|
| A | GB - A - 1 585 565 (MESSER GRIES-HEIM)<br><br>* Seite 2, Zeilen 67-95; Fig. 1 *<br><br>-- | 1 |
| A | LÖBEL, MÜLLER, SCHMID "Lexikon der DVA", 8. Auflage, 1982<br>VERLAG MODERNE INDUSTRIE, Landsberg<br>Seite 363<br><br>* Seite 363, Stichwort "Loch-streifenlocher", Punkt d.) *<br><br>-- | 1 |
| A | GB - A - 2 024 561 (TEKNOS)<br><br>* Abstract *<br><br>-- | |
| P,A | DE - A1 - 3 030 922 (MESSER GRIES-HEIM)<br><br>---- | |

**EINSCHLÄGIGE DOKUMENTE**

KLASSIFIKATION DER ANMELDUNG (Int. Cl.³)

RECHERCHIERTE SACHGEBIETE (Int. Cl.³)

EPA Form 1503.2 06.78